# FASCICULE DE BREVET EUROPEEN

(11) **EP 0 774 603 B1**
(45) Date de publication et mention de la délivrance du brevet: **04.04.2001**
(21) Numéro de dépôt: 96402428.5
(22) Date de dépôt: 14.11.1996
(51) Int. Cl.: F16J 15/00, F16J 15/48

(54) **Dispositif d'étanchéité à brosses axiales et asservi par pression statique en déplacement axial**
Axialbürstendichtung, deren Axialverschiebung durch statischen Druck gesteuert wird
Axial brush seal with axial shifting controlled by the static pressure

(30) Priorité: 15.11.1995 FR 9513507
(43) Date de publication de la demande: 21.05.1997
(73) Titulaire: Snecma Moteurs, 75015 Paris (FR)
(72) Inventeur: Bainachi, Daniel, Olivier, 77210 Avon (FR); Plona, Daniel, Georges, 77870 Vulaines sur Seine (FR); Dusserre-Telmon, Guy, Franck, Paul, 77115 Sivry-Courtry (FR)

(56) Documents cités:
- GB-A- 2 167 141
- US-A- 4 669 735
- US-A- 5 000 463

## Description

L'invention concerne un dispositif d'étanchéité disposé entre un stator et un disque de rotor tournant sur lui-même et que le stator entoure.

Un moyen, classique dans les moteurs d'avion, pour assurer cette étanchéité consiste à placer un joint à labyrinthe à travers le jeu entre stator et rotor : il s'agit d'un dispositif composé de crêtes - appelées léchettes- parallèles et planes érigées sur le rotor, saillant vers le stator et qui frottent contre une couche de matériau tendre -appelé abradable- recouvrant le stator et qu'elles érodent de façon à ne laisser subsister qu'un léger jeu avec cette couche.

Cependant, des états particuliers du moteur peuvent provoquer des dilatations thermiques différentielles exceptionnelles qui font pénétrer les léchettes plus profondément dans l'abradable, si bien qu'un jeu beaucoup plus important existe ensuite dans les conditions normales d'utilisation ; on doit conclure que l'intérêt de ce genre de joints est alors compromis.

D'autres joints courants dans cette fonction sont des joints élastiques et qui comprennent soit des éléments tels que des soies de brosse fixés à l'une des pièces de l'assemblage et frottant sur l'autre, qui les courbe, soit des éléments façonnés en lèvres rigides, montés par l'intermédiaire de ressorts sur l'une des pièces et repoussés par ces ressorts contre l'autre des pièces.

Ces joints donnent satisfaction pour de nombreuses applications, mais les dilatations différentielles en direction radiale entre les rotors et les stators envisagés ici sont trop importantes pour qu'il soit facile de les interposer dans de bonnes conditions, car les jeux à combler varient dans des limites telles qu'on obtient toujours en pratique des jeux excessifs ou au contraire trop réduits pour le joint choisi, qui perd alors de son efficacité, ou est usé prématurément selon le cas.

L'invention repose sur une idée nouvelle selon laquelle des joints élastiques sont malgré tout employés pour assurer l'étanchéité entre le stator et le rotor ; mais au lieu de les disposer sous forme de joints plans d'orientation radiale conformément aux conceptions connues et qui frottent contre la tranche du disque de rotor, on recourt à des joints cylindriques, d'orientation axiale, qui frottent contre les périphéries de surfaces planes opposées du rotor. Cette disposition n'est pourtant pas suffisante en elle-même car les dilatations thermiques différentielles s'exercent également dans le sens axial, de sorte que les mêmes problèmes de grandes variations de jeux se posent.

Il est donc conforme à l'invention de faire porter les joints élastiques par un corps flottant de stator, mobile axialement par rapport à celui-ci et qui entoure le rotor, et dont la fonction est de suivre les déplacements axiaux du rotor pour assurer toujours de bonnes conditions de service aux joints élastiques.

Un aménagement un peu plus compliqué est alors nécessaire, et l'invention consiste donc en un dispositif d'étanchéité selon la revendication 1 et disposé entre un stator et un disque de rotor tournant autour d'un axe et séparant un secteur à haute pression d'un secteur à basse pression, comprenant un corps fixe en rotation et mobile en translation dans le stator selon l'axe, caractérisé en ce que le corps comprend deux flancs recouvrant des périphéries de deux faces du disque opposées et dirigées chacune vers un des secteurs, et en ce qu'il comprend : deux joints d'étanchéité élastiques de forme cylindrique et d'extension axiale comprimés chacun entre un des flancs et une des faces opposées ; deux joints d'étanchéité de butée de forme cylindrique et d'extension axiale s'étendant chacun entre un des flancs et une des faces opposées mais plus courts que les joints élastiques ; un des joints de butée entourant un des joints élastiques vers le secteur à haute pression et un des joints élastiques entourant un des joints de butée vers le secteur à basse pression ; et deux joints d'étanchéité de glissement alternatif, de forme plane et circulaire et disposés entre le stator et des rebords du corps d'étanchéité chacun dans un des secteurs, ayant chacun un diamètre extérieur égal au diamètre du joint élastique situé vers le même secteur.

Un corps flottant axialement et chargé de contribuer à assurer l'étanchéité entre deux sections à pressions différentes d'une turbomachine conforme au préambule de la revendication 1 est illustré dans le brevet français 2 018 924, mais sa structure est différente.

L'invention va maintenant être décrite plus en détail à l'aide des figures suivantes annexées à titre illustratif et qui décrivent une réalisation non limitative de l'invention :
- la figure 1 représente l'invention au repos, et
- la figure 2 représente l'invention dans un état de perturbation de cet équilibre.

L'invention est donc utilisable dans une turbomachine, entre un stator 1 et un rotor 2 qui ne sont que partiellement représentés. Le stator 1 est formé essentiellement par une paroi 2 qui présente, entre deux surfaces cylindriques 3a et 3b de même diamètre, un renfoncement 4 correspondant à une portion cylindrique de plus grand diamètre. Une chambre périphérique 5 est formée dans le renfoncement 4. L'élément essentiel du rotor est ici un disque 6 tournant autour d'un axe X-X concentrique aux portions 3a, 3b et 4 du stator 1 et qui s'étend partiellement dans la chambre périphérique 5, son diamètre étant supérieur à celui des surfaces cylindriques 3a et 3b.

La pièce caractérisant l'invention est un corps flottant de stator 7, en forme de collier entourant la périphérie du disque de rotor 6. Plus précisément, sa section est en forme de chapeau qu'on peut décomposer en : deux flancs 8a et 8b symétriques, recouvrant chacun une extrémité d'une des faces planes latérales et opposées 9a et 9b du disque de rotor 6 ; une section mitoyenne 10 cylindrique qui les unit par leurs extrémités de plus grand diamètre, entourant la tranche 11 du disque de rotor 6 et s'étendant exclusivement dans la chambre périphérique 5 ; et deux portions de rebord 12a et 12b partant de l'extrémité opposée, de plus petit diamètre, des flancs 8a et 8b et s'éloignant l'un de l'autre pour pénétrer dans les surfaces cylindriques 3a et 3b en étant concentriques à elles.

Les rebords 12a et 12b portent des joints de glissement 13a et 13b qui frottent précisément sur les surfaces cylindriques 3a et 3b au gré des glissements du corps flottant 7 le long de l'axe X ; ils assurent le soutien du corps flottant 7 en prenant appui sur les surfaces cylindriques 3a et 3b, et ils contribuent à isoler le volume de la chambre périphérique 5 des portions libres a et b de la machine situées de part et d'autre du disque de rotor 6 et dont la première est une zone à basse pression et la seconde une zone à haute pression.

On trouve aussi deux joints élastiques 14a et 14b qui peuvent être des joints à brosse formées de soies flexibles ou, comme on l'a représenté ici, des joints formés d'une lèvre d'étanchéité rigide repoussée par un ressort contre la pièce, ici le disque de rotor 6 contre laquelle ils frottent. Les joints élastiques 14a et 14b sont fixés au corps flottant 7, par exemple en étant engagés dans des gorges 15a et 15b de celui-ci dans lesquelles les ressorts sont complètement enfoncés. Ils sont de forme cylindrique et orientés axialement ; leurs diamètres sont égaux entre eux et sensiblement égaux au diamètre extérieur des joints de glissement 13a et 13b, ou au diamètre des surfaces cylindriques 3a et 3b.

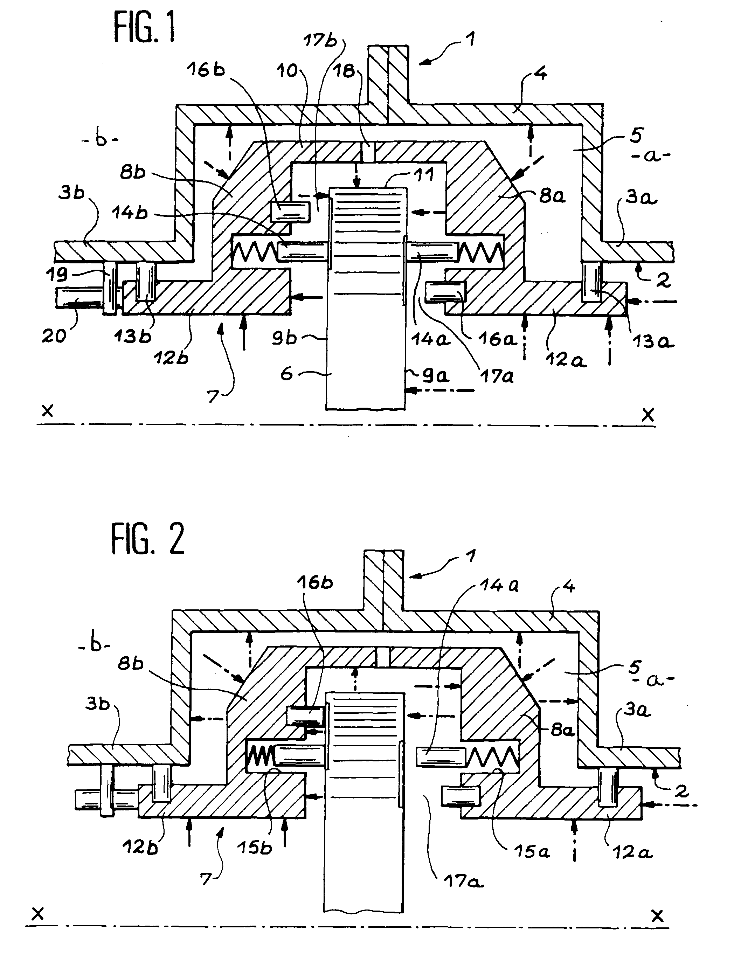

On observe enfin deux joints de butée 16a et 16b, fixés comme les précédents sur les faces en regard des flancs 8a et 8b et dirigés vers le disque de rotor 6 ; ils sont eux aussi de forme cylindrique et de direction axiale, mais, contrairement aux précédents, ils ne s'étendent pas jusqu'aux faces latérales 9a et 9b du disque de rotor 6 mais restent séparés d'elles par un jeu 17a ou 17b dans la situation d'équilibre que la figure 1 illustre. Une autre particularité de ces joints 16a et 16b est qu'ils ne sont pas symétriques, mais que celui (16a) qui est situé du côté « a » des basses pressions est entouré par le joint élastique 14a correspondant, alors que l'autre joint de butée 16b a un plus grand diamètre que l'autre joint élastique 14b et se trouve dans la chambre périphérique 5.

Un pion 19 fixé à une des surfaces cylindriques 3b et pris dans les deux branches d'une fourchette 20 dépassant d'un des rebords 12b permet d'éviter la rotation du corps flottant 7.

La chambre périphérique 5 considérée pour le fonctionnement de l'invention a un volume délimité par le renfoncement 4, la périphérie du disque de stator 6, les rebords 12a et 12b, et les joints de glissement et élastiques 13a et 13b, 14a et 14b. Son unité est maintenue par un trou 18 opéré à travers la portion mitoyenne 10 du corps flottant 7. La pression dans cette chambre a été figurée par des flèches s'exerçant sur ses surfaces et les pressions dans les zones a et b soumises à la haute pression et à la basse pression ont été figurées par des flèches de deux autres sortes. Le spécialiste se rendra compte presque immédiatement que les forces exercées par ces différentes pressions sur les surfaces libres du corps flottant 7 s'annulent toutes en direction axiale, essentiellement grâce au choix des diamètres des joints élastiques 14a et 14b. Comme ces joints élastiques 14a et 14b sont comprimés de la même manière par le disque de rotor 6, l'équilibre n'est pas rompu et le corps flottant 7 reste immobile : des fuites peuvent être observées à travers les joints élastiques 14a et 14b, mais elles s'équilibrent et la pression ne change pas dans la chambre périphérique 5.

Si une perturbation de la position du disque de rotor 6 apparaît en direction axiale, on peut arriver à la situation de la figure 2 : le disque de rotor 6 s'est déplacé vers la zone b des hautes pressions, a repoussé le joint élastique correspondant 14b et est finalement venu en butée contre le joint 16b ; dans cette situation, l'autre joint élastique 14a est détaché du disque de stator 6 ou tout du moins pressé beaucoup moins fortement, de sorte qu'il n'assure plus la même qualité d'étanchéité. La conséquence est que la chambre périphérique 5, qui était auparavant soumise à une pression intermédiaire entre la basse pression et la haute pression, s'ouvre à l'influence de la basse pression, et sa pression devient éventuellement absolument égale à cette basse pression. On en arrive à une situation où l'étanchéité est principalement assurée par les deux joints de glissement 13b et de butée 16b du côté des hautes pressions, et le joint élastique 14b du côté des hautes pressions n'exerce qu'une étanchéité moindre, si bien qu'on peut considérer que l'intervalle entre lui et le joint de butée 16b devient également siège de la haute pression.

Dans cette situation où la pression de la chambre périphérique 5 a diminué, on observe un déséquilibre dû à l'irruption de la haute pression entre les joints 14b et 16b : le corps flottant 7 est alors soumis à une résultante de force de pression dirigée vers les hautes pressions qui le déplace vers la gauche, comme le disque de rotor 6 précédemment. Ce mouvement du corps flottant 7 dure jusqu'à ce que les joints élastiques 14a et 14b exercent de nouveau la même étanchéité et qu'on retrouve la situation d'équilibre de la figure 1, le disque de rotor 6 et le corps flottant 7 ayant toutefois effectué un mouvement identique.

Une situation symétrique apparaît pour les déplacements du disque de rotor 2 vers la zone des basses pressions : c'est alors le joint de butée du côté des basses pressions 16a qui exercera l'étanchéité principale, et les hautes pressions exerceront sur le corps flottant 7 une force résultante dirigée vers la droite et s'exerçant entre les joints élastiques 14a et de butée 16a du côté des basses pressions : le corps flottant 7 sera alors repoussé vers la droite pour tendre ici aussi vers la position d'équilibre.

Les surfaces du disque de rotor 6 sur lesquelles frottent les joints élastiques 14 et de butée 16 sont polies pour former des glaces de frottement.

Les joints élastiques 14 peuvent être des genres connus et notamment formés de soies de brosse.

## Revendications

1. Dispositif d'étanchéité disposé entre un stator (1) et un disque (6) de rotor tournant autour d'un axe (X) et séparant un secteur à haute pression (b) d'un secteur à basse pression (a), comprenant un corps (7) fixe en rotation et mobile en translation dans le stator (1) selon l'axe (X), caractérisé en ce que le corps est en forme de collier entourant la périphérie du disque (6) de rotor et comprend deux flancs (8) recouvrant des périphéries de deux faces (9) du disque (6) opposées et dirigées chacune vers un des secteurs (a, b), et en ce qu'il comprend : deux joints d'étanchéité élastiques (14) de forme cylindrique et d'extension axiale comprimés chacun entre un des flancs (8) et une des faces (9) opposées ; deux joints d'étanchéité de butée (16) de forme cylindrique et d'extension axiale s'étendant chacun entre un des flancs et une des faces opposées mais plus courts que les joints élastiques ; un des joints de butée entourant (16b) un des joints élastiques (14b) vers le secteur à haute pression (b) et un des joints élastiques (14a) entourant un des joints de butée (16a) vers le secteur à basse pression (a) ; et deux joints d'étanchéité (13) de glissement alternatif, de forme plane et circulaire et disposés entre le stator et des rebords (12a, 12b) du corps chacun dans un des secteurs, ayant chacun un diamètre extérieur égal au diamètre du joint élastique situé vers le même secteur, de manière à assurer l'étanchéité lors d'un déplacement axial du disque (6) de rotor.

2. Dispositif d'étanchéité selon la revendication 1, caractérisé en ce que tous les joints sont portés par le corps.

3. Dispositif d'étanchéité selon l'une quelconque des revendications 1 ou 2, caractérisé en ce qu'une partie (10) du corps reliant les flancs (8) est percée (18).

## Patentansprüche

1. Zwischen einem Stator (1) und einer um eine Achse (X) drehenden Rotorscheibe (6) angeordnete Dichtungsvorrichtung, die einen Hochdrucksektor (b) von einem Niederdrucksektor (a) trennt und einen Körper (7) aufweist, der gegen Drehung fixiert ist und in dem Stator (1) eine Translationsbewegung in Richtung der Achse (X) ausführen kann,
**dadurch gekennzeichnet,**
daß der Körper die Form eines die Peripherie der Rotorscheibe (6) umschließenden Bügels hat und zwei Flanken (8) besitzt, die die Peripherien zweier entgegengesetzter und jeweils einem der Sektoren (a, b) zugewandter Seiten (9) der Rotorscheibe (6) überdecken,
und daß die Vorrichtung ferner aufweist:
zwei zylindrisch geformte und in axialer Richtung ausgedehnte elastische Dichtungen (14), die jeweils zwischen einer der Flanken (8) und einer der genannten entgegengesetzten Seiten (9) komprimiert sind,
zwei zylindrisch geformte und in axialer Richtung ausgedehnte Anschlagdichtungen (16), die sich jeweils zwischen einer der Flanken und einer der genannten entgegengesetzten Seiten erstrecken, jedoch kürzer sind als die elastischen Dichtungen, wobei in Richtung auf den Hochdrucksektor (b) eine der Anschlagdichtungen (16b) eine der elastischen Dichtungen (14b) umschließt und in Richtung auf den Niederdrucksektor (a) eine der elastischen Dichtungen (14a) eine der Anschlagdichtungen in Richtung auf den Niederdrucksektor (a) umschließt,
und zwei ebene und kreisförmige Wechselgleitdichtungen (13), die zwischen dem Stator und Randteilen (12a, 12b) des Körpers jeweils in einem der Sektoren angeordnet sind und die jeweils einen Außendurchmesser haben, der gleich dem Durchmesser der zu demselben Sektor hin gelegenen elastischen Dichtung ist, so daß sie bei einer axialen Verschiebung der Rotorscheibe (6) die Dichtigkeit gewährleisten.

2. Dichtungsvorrichtung nach Anspruch 1, dadurch gekennzeichnet, daß alle Dichtungen von dem Körper getragen werden.

3. Dichtungsvorrichtung nach einem der Anspruche 1 oder 2, dadurch gekennzeichnet, daß ein Teil (10) des Korpers, der die Flanken (8) miteinander verbindet, durchlocht ist.

## Claims

1. A sealing device disposed between a stator (1) and a rotor disc (6) rotating around an axis (X) and separating a high-pressure sector (b) from a low-pressure sector (a) comprising a non-rotating member (7) displaceable in the stator (1) along the axis (X), characterised in that the member is in the form of a collar extending around the periphery of the rotor disc (6) and comprises two flanks (8) overlapping the peripheries of two opposite faces (9) of the disc (6), one face facing the sector (a) and the other face facing the sector (b), and in that it comprises: two resilient axially extending cylindrical seals (14) each compressed between one of the flanks (8) and one of the opposite faces (9) of the disc; two axially extending cylindrical end-stop seals (16) each extending between one of the flanks and one of the opposite faces but being shorter than the resilient seals; one of the end-stop seals (16b) extending around one of the resilient seals (14b) towards the high-pressure sector (b) and one of the resilient seals (14a) extending around one of the end-stop seals (16a) towards the low-pressure sector (a); and two slidingly reciprocatable flat circular seals (13) disposed between the stator and edgings (12a, 12b) of the member, disposed one each in each sector, each having the same external diameter as the diameter of the resilient seal disposed near the same sector so as to ensure sealing tightness during an axial displacenent of the rotor disc (6) .

2. A sealing device according to claim 1, characterised in that all the seals are disposed on the member.

3. A sealing device according to claim 1 or claim 2, characterised in that a part (10) of the member interconnecting the flanks (8) is pierced (18).
